# EUROPÄISCHE PATENTSCHRIFT

(11) **EP 0 435 122 B1**
(45) Veröffentlichungstag und Bekanntmachung des Hinweises auf die Patenterteilung: **02.11.1994**
(21) Anmeldenummer: 90124378.2
(22) Anmeldetag: 17.12.1990
(51) Int. Cl.: G01N 31/16

(54) **Karl-Fischer-Reagenz und Verfahren zur Bestimmung von Wasser mit Hilfe des Reagenzes**
Karl-Fischer-reagent and method for the determination of water using this reagent
Réactif Karl-Fischer et méthode de détermination de l'eau utilisant ce réactif

(30) Priorität: 27.12.1989 DE 3943118
(43) Veröffentlichungstag der Anmeldung: 03.07.1991
(73) Patentinhaber: MERCK PATENT GmbH, D-64271 Darmstadt (DE)
(72) Erfinder: Fischer, Wolfgang, Dr., W-6100 Darmstadt (DE); Wieland, Gerhard, Dr., W-6140 Bensheim 3 (DE); Krenn, Karl-Dieter, W-6102 Pfungstadt (DE)

(56) Entgegenhaltungen:
- EP-A- 0 127 740
- DE-A- 3 614 135
- CHEMICAL ABSTRACTS, Band 67, 1967, Seite 2427, Zusammenfassung Nr. 25436t, Columbus, Ohio, US ; A.I. GENGRINOVICH et al. : "Use of bromine iodide in Fischer's reagent for the quantitative determination of water in pharmaceutical preparations"

## Beschreibung

Die Erfindung betrifft ein modifiziertes Karl-Fischer-Reagenz zur Bestimmung von Wasser, das anstelle von Jod eine andere Jodquelle enthält, sowie ein Verfahren zur Bestimmung von Wasser mit Hilfe dieses Reagenzes.

Der Hauptnachteil bei der üblichen Karl-Fischer-Methode zur Wasserbestimmung liegt in dem langsamen Reaktionsablauf und dem dadurch bedingten mühsamen und langwierigen Titrieren. Hinzu kommt die begrenzte Dauer der Aufbewahrung, der unbeständige Titer und die Notwendigkeit einer dunklen und kühlen Lagerung. Die bisherigen Jodlösungen sind in den üblichen Kunststoffflaschen nicht stabil, weil die Flaschen Jod aufnehmen und sich dabei verfärben.

In Chemical Abstracts 67, 25436t (1967) wurde vorgeschlagen, die Jodlösung in Karl-Fischer-Reagenzien durch eine Lösung von Jodbromid zu ersetzen. Ein Karl-Fischer-Reagenz mit Jodbromid zeigt bei der Lagerung praktisch die gleiche Stabilität wie ein mit Jod hergestelltes Reagenz. Möglicherweise hat deshalb dieser Vorschlag keinen Eingang in die Praxis gefunden.

Der Erfindung lag die Aufgabe zugrunde, ein modifiziertes Karl-Fischer-Reagenz zur Verfügung zu stellen, das stabil ist, schnell reagiert, exakte Analysenergebnisse liefert und einen möglichst stabilen Endpunkt auch bei variabler Wassermenge zeigt.

Überraschenderweise wurde gefunden, daß ein solches Karl-Fischer-Reagenz erhalten werden kann, wenn anstelle von Jod Jodhalogenide zusammen mit Salzen aromatischer Stickstoffheterocyclen verwendet werden.

Diese Substanzen sind in der Reagenzlösung gut löslich, derartige Lösungen sind lagerstabil und zeigen stabile Endpunkte auch bei der Titration über einen großen Wasserbereich. Da diese Lösungen kein elementares Jod enthalten, können sie auch ohne Nachteile in Kunststoffflaschen aufbewahrt werden.

Gegenstand der Erfindung ist ein Karl-Fischer-Reagenz zur Bestimmung von Wasser, das dadurch gekennzeichnet ist, daß das Reagenz anstelle von Jod eine etwa äquimolare Menge von Jodhalogeniden und Salzen aromatischer Stickstoffheterocyclen enthält.

Ferner betrifft die Erfindung ein Verfahren zur Bestimmung von Wasser mit Hilfe des genannten Karl-Fischer-Reagenzes.

Überraschenderweise hat sich gezeigt, daß die erfindungsgemäßen Karl-Fischer-Reagenzien nicht nur schneller reagieren als Jod enthaltende Reagenzien, sondern daß sie auch um den Faktor 3 stabiler sind als die bekannten, Jodbromid enthaltenden Lösungen.

Geeignete Jodhalogenide nach der Erfindung sind Jodchlorid und Jodbromid. Geeignete Salze aromatischer Stickstoffheterocyclen sind die Hydrohalogenide, vorzugsweise Hydrochloride und Hydrobromide, von Pyridin, Imidazol sowie von deren Alkyl- oder Phenylderviaten. Die Jodhalogenide und die Salze der aromatischen Stickstoffheterocyclen sollten in etwa äquimolaren Mengen vorliegen, d.h. in einem Verhältnis von 0,8 bis 1,2 zu 1, vorzugsweise 1:1.

Als Lösungsmittel sowohl für das Auflösen der auf ihren Wassergehalt zu untersuchenden Probe als auch für das Titriermittel eignen sich alle in der Literatur zu diesem Zweck beschriebenen Lösungsmittel, vorzugsweise Alkohole und/oder Glykole, insbesondere niedere Alkohole wie Methanol, Ethanol, Propanol usw. sowie Ethylenglykol und Ethylenglykolmonoalkylether bzw. Diethylenglykolmonoalkylether und Propylenglykolmonoalkylether. Für das erfindungsgemäße Reagenz ist z.B. auch Butyrolacton als Lösungsmittel bestens geeignet. Die Lösungsmittel können einzeln oder in einem beliebigen Mischungsverhältnis verwendet werden.

Das erfindungsgemäße Karl-Fischer-Reagenz liegt vorzugsweise als sogenanntes Einkomponentenreagenz vor, das alle Bestandteile in einer einzigen Lösung enthält. Das Einkomponentenreagenz ist besonders dann von Vorteil, wenn die zu untersuchende Substanz in einem anderen Lösungsmittel besser löslich ist als im Lösungsmittel des Reagenzes. In diesem Fall ist auch die Reaktionsgeschwindigkeit nicht von der Lösegeschwindigkeit abhängig. Es ist natürlich auch möglich, das erfindungsgemäße Karl-Fischer-Reagenz als sogenanntes Zweikomponentenreagenz einzusetzen, das dann aus zwei Lösungen, einem Lösemittel und einem Ttitriermittel besteht. Das Lösemittel enthält Schwefeldioxid, Pyridin oder ein übliches Pyridinersatzmittel in einem Lösungsmittel und dient zur Aufnahme der auf ihren Wassergehalt zu untersuchenden Probe. Das Titriermittel ist eine auf einen konstanten Titer eingestellte Lösung der erfindungsgemäßen Mischung von Jodhalogenid und einem Salz eines aromatischen Stickstoffheterocyclus in einem Lösungsmittel.

Mit dem erfindungsgemäßen Karl-Fischer-Reagenz kann der Endpunkt der maßanalytischen Wasserbestimmung visuell, photometrisch oder elektrometrisch (Dead-Stop-Methode, coulometrische Methode) bestimmt werden. Das Reagenz eignet sich sowohl für den Einsatz im Titrierautomaten als auch als Feldmethode. Die Titration erfolgt generell unter Ausschluß von Luftfeuchtigkeit. Bevorzugt ist heute die elektrometrische Titration, insbesondere die sogenannte Dead-Stop-Methode.

### Beispiel 1

Zur Herstellung einer Titrierlösung werden in 1 l Methanol 23 g Imidazol aufgelöst und 12 g Chlorwasserstoff eingeleitet. Anschließend werden 55 g Jodmonochlorid zugegeben und aufgelöst.

Der Faktor dieser Lösung beträgt 5,71, d.h. 1 ml der Lösung zeigt 5,71 mg Wasser an.

### Beispiel 2

Zur Herstellung einer Titrierlösung werden nacheinander unter Rühren 39 g Pyridiniumchlorid und 70 g Jodmonobromid in 1 l Methanol aufgelöst. F = 5,24.

### Beispiel 3

Zur Herstellung einer Titrierlösung werden in 1 l Butyrolacton 91 g des Jodchlorid-Additionsproduktes von Imidazolhydrochlorid gelöst. F = 5,32.

### Beispiel 4

Mit dem Karl-Fischer-Processor 658 der Firma Metrohm wurde ein Vergleichsversuch durchgeführt. Titriert wurde mit der Karl-Fischer-Titrierlösung nach Beispiel 1. Als Vergleichslösung diente eine äquimolare Lösung von Jod in Methanol.

In beiden Fällen wurden 30 ml eines Lösungsmittels vorgelegt, das aus 25 ml Ethylenglykolmonomethylether und 5 ml einer pyridinhaltigen Schwefeldioxidlösung in Methanol bestand (9 g Schwefeldioxid und 35 g Pyridin pro 100 g Lösung). Das Lösungsmittel wurde austitriert. Es wurden dann 25 mg Wasser zugesetzt und erneut austitriert. Die Zeiten für die Titration dieser 25 mg Wasser betrugen:
- Lösung nach Beispiel 1:: 135 sec.
- Jodlösung:: 220 sec.

## Patentansprüche

1. Karl-Fischer-Reagenz zur Bestimmung von Wasser, dadurch gekennzeichnet, daß das Reagenz anstelle von Jod eine etwa äquimolare Menge von Jodhalogeniden und Salzen aromatischer Stickstoffheterocyclen enthält.

2. Karl-Fischer-Reagenz nach Anspruch 1, dadurch gekennzeichnet, daß es als Salze aromatischer Stickstoffheterocyclen Pyridin- oder Imidazolhydrohalogenide enthält.

3. Verfahren zur Bestimmung von Wasser mit Hilfe des Karl-Fischer-Reagenzes nach den Ansprüchen 1 und 2.

## Claims

1. Karl-Fischer reagent for the determination of water, characterized in that, instead of iodine, the reagent contains an approximately equimolar amount of iodine halides and salts of aromatic nitrogen-containing heterocyclic compounds.

2. Karl-Fischer reagent according to Claim 1, characterized in that it contains pyridine hydrohalides or imidazole hydrohalides as the salts of aromatic nitrogen-containing heterocyclic compounds.

3. Process for the determination of water with the aid of the Karl-Fischer reagent according to Claims 1 and 2.

## Revendications

1. Réactif de Karl Fischer pour la détermination de l'eau, caractérisé en ce que le réactif contient, à la place d'iode, une quantité approximativement équimolaire d'halogénure d'iode et de sel de composé aromatique azoté hétérocyclique.

2. Réactif de Karl Fischer selon la revendication 1, caractérisé en ce qu'il contient comme sels de composé aromatique azoté hétérocyclique, des hydrohalogénures de pyridine ou d'imidazole.

3. Procédé de détermination de l'eau, en utilisant le réactif de Karl Fischer selon les revendications 1 et 2.
